# EUROPÄISCHE PATENTSCHRIFT

(11) **EP 1 511 788 B1**
(45) Veröffentlichungstag und Bekanntmachung des Hinweises auf die Patenterteilung: **14.09.2005**
(21) Anmeldenummer: 03727489.1
(22) Anmeldetag: 19.05.2003
(51) Int. Cl.: C08G 65/20

(54) **VERFAHREN ZUR HERSTELLUNG VON POLYTETRAHYDROFURAN MIT NIEDRIGEN FARBZAHLEN**
METHOD FOR PRODUCING POLYTETRAHYDROFURANE WITH LOW COLOUR INDICES
PROCEDE POUR PRODUIRE DU TETRAHYDROFURANE A FAIBLES INDICES DE COLORATION

(30) Priorität: 24.05.2002 DE 10223067
(43) Veröffentlichungstag der Anmeldung: 09.03.2005
(73) Patentinhaber: BASF Aktiengesellschaft, 67056 Ludwigshafen (DE)
(72) Erfinder: MEIER, Anton, B-2950 Kapellen (BE); MENGER, Volkmar, 67434 Neustadt (DE); SIGWART, Christoph, 69198 Schriesheim (DE)
(86) Internationale Anmeldenummer: PCT/EP2003/005234
(87) Internationale Veröffentlichungsnummer: WO 2003/099905

(56) Entgegenhaltungen:
- EP-A- 0 041 790
- US-B1- 6 201 137
- PATENT ABSTRACTS OF JAPAN vol. 011, no. 030 (C-400), 29. Januar 1987 (1987-01-29) & JP 61 200979 A (MITSUBISHI CHEM IND LTD), 5. September 1986 (1986-09-05)

## Beschreibung

Die Erfindung betrifft ein Verfahren zur Herstellung von Polytetrahydrofuran, Tetrahydrofuran-Copolymeren, deren Mono- oder Diestern sowie den Mono- oder Diestern von Polytetrahydrofuran mit niedriger Farbzahl.

Polytetrahydrofuran - im folgenden kurz PTHF genannt -, das auch als Polyoxybutylenglykol bekannt ist, wird in der Kunststoff- und Kunstfaserindustrie als vielseitiges Zwischenprodukt verwendet und dient unter anderem zur Herstellung von Polyurethan-, Polyester- und Polyamid-Elastomeren. Daneben ist es, wie auch manche seiner Derivate, in vielen Anwendungsfällen ein wertvoller Hilfsstoff, so zum Beispiel als Dispergiermittel oder beim Entfärben (Deinken) von Altpapier.

PTHF wird technisch üblicherweise durch Polymerisation von Tetrahydrofuran - im folgenden kurz THF genannt - an geeigneten Katalysatoren hergestellt. Durch Zugabe geeigneter Reagenzien kann die Kettenlänge der Polymerketten gesteuert werden und so das mittlere Molekulargewicht auf den gewünschten Wert eingestellt werden. Solche Reagenzien werden Kettenabbruchreagenzien oder "Telogene" genannt. Die Steuerung erfolgt dabei durch Wahl von Art und Menge des Telogens. Durch Wahl geeigneter Telogene können zusätzlich funktionelle Gruppen an ein Ende oder beide Enden der Polymerkette eingeführt werden. So können zum Beispiel durch Verwendung von Carbonsäuren oder Carbonsäureanhydriden als Telogene die Mono-. oder Diester des PTHFs hergestellt werden. Andere Telogene wirken nicht nur als Kettenabbruchreagenzien, sondern werden auch in die wachsende Polymerisatkette des PTHFs eingebaut. Sie haben nicht nur die Funktion eines Telogens, sondern sind gleichzeitig ein Comonomer und können daher mit gleicher Berechtigung sowohl als Telogen wie auch als Comonomer bezeichnet werden. Beispiele für solche Comonomere sind Telogene mit zwei Hydroxygruppen wie die Dialkohole. Dies können beispielsweise Ethylenglykol, Propylenglykol, Butylenglykol, 1,4-Butandiol, 2-Butin-1,4-diol, 1,6-Hexandiol oder niedermolekulares PTHF sein. Weiterhin sind als Comonomere 1,2-Alkylenoxide, wie zum Beispiel Ethylenoxid oder Propylenoxid, 2-Methyltetrahydrofuran oder 3-Methyltetrahydrofuran geeignet. Die Verwendung solcher Comonomere führt zur Herstellung von Tetrahydrofuran-Copolymeren und ermöglicht es auf diese Weise, PTHF chemisch zu modifizieren.

Als Katalysatoren der Polymerisation von THF zu PTHF im Produktionsmaßstab sind saure Katalysatoren geeignet. Diese haben allerdings den Nachteil, daß die Polymerisate mit gelb bis bräunlichen Verfärbungen erhalten werden. Diese Verfärbungen hängen neben Produktionsparametern, wie der Temperatur, insbesondere auch von der Qualität des eingesetzten THF ab. THF in technischer Qualität enthält verschiedene Verunreinigungen in Konzentrationen von 10 bis 1000 ppm. Mehrere Verunreinigungen führen bei der Polymerisation von THF zu den oben genannten Verfärbungen. Mit den unvorteilhaften Verfärbungen geht gleichzeitig eine verringerte Reaktionsfähigkeit bei der Herstellung von Polyestern oder Polyurethanen aus PTHF einher.

Es ist bislang nicht vollständig geklärt, welche Verunreinigungen in welchem Ausmaß zur Farbbildung beitragen. Bekannt ist seit längerem der negative Einfluß von Aldehyden, wie Propionaldehyd und Butyraldehyd. Ebenso kann Dihydrofuran zu Verfärbungen führen. Des weiteren führen auch THF-Hydroperoxide zu Verfärbungen während der Polymerisation. Diese Peroxide werden leicht durch Reaktion von THF mit Sauerstoff gebildet. Die Bildung dieser unerwünschten Peroxide kann bei der Herstellung von THF, bei dessen Reindestillation oder auch bei der Lagerung vor der Polymerisation zu PTHF erfolgen. Deshalb wird bei der Herstellung sowie bei der Lagerung von Rein-THF mit Inertgas gearbeitet, um den Kontakt des THF mit Sauerstoff zu minimieren. Im Produktionsmaßstab wird hierbei üblicherweise Stickstoff technischer Qualität verwendet, das als Verunreinigung Sauerstoff in Konzentrationen von 10-200 ppm enthält. Hochreiner sauerstofffreier Stickstoff oder ein anderes sauerstofffreies Inertgas wie z.B. Argon wäre hier von Vorteil, würde allerdings zu erheblich höheren Kosten führen. Bei der Lagerung von THF in einem mit Stickstoff abgedeckten Tank ist ferner zu bedenken, daß technischen Störungen der Zutritt kleiner Mengen Luft vorkommen kann. Dies führt zu einer Verunreinigung des THF mit Sauerstoff und dadurch zur Bildung von Peroxiden.

Es sind daher im Stand der Technik bereits verschiedene Anstrengungen unternommen worden, um das zur Polymerisation verwendete technische THF so vorzubehandeln, daß die Verunreinigungen verringert werden. So ist aus der DE-A-2 801 792 bekannt, THF vor der Polymerisation mit starken Mineralsäuren, organischen Sulfonsäuren, Silicagel und/oder Bleicherden zu behandeln, wodurch Polymerisate mit verbesserter Farbzahl erhalten werden. Es hat sich jedoch gezeigt, daß diese Behandlungsmethode nicht in jedem Fall reproduzierbar auf jede verfügbare technische Qualität von THF anwendbar ist.

In der JP-A-61-200979 wird ein Verfahren zur Herstellung von Rein-THF aus technischem THF beschrieben, das noch Verunreinigungen von zumindest n-Butyraldehyd und Dihydrofuran enthält. Als weitere Verunreinigung kann beispielsweise Wasser vorhanden sein. Der Druckschrift ist zu entnehmen, daß die Verunreinigungen in Konzentrationen von etwa 500 ppm vorliegen. Die Überführung dieses technischen THFs, das im folgenden für die Zwecke der vorliegenden Erfindung auch als Roh-THF bezeichnet wird, erfolgt über eine Hydrierung in Gegenwart eines geeigneten Katalysators. Nach dieser Hydrierung wird das so erhaltene Reaktionsprodukt destillativ gereinigt und dabei auch von dem eventuell enthaltenen Wasser befreit. Das nach der Hydrierung und anschließender Destillation gewonnene THF weist eine Reinheit von 99,9 % auf und enthält noch gewisse Mengen von n-Butyraldehyd sowie Dihydrofuran. Eine vollständige Beseitigung dieser Verunreinigungen gelingt bei dieser Vorgehensweise nicht.

Im Patent US 4,257,961 wird ein Verfahren beschrieben, bei dem nach dem Reppe-Verfahren (Acetylen und Formaldehyd) hergestelltes Roh-THF in einer mehrstufigen Destillation gereinigt wird. Während dieser mehrstufigen Destillation wird die Konzentration an Methacrolein, Dihydrofuran, Propionaldehyd und Butyraldehyd durch eine Hydrierungsstufe verringert. Die Hydrierung erfolgt hierbei mit Raney-Nickel (Suspension) als Katalysator. Die gebildeten Hydrierprodukte werden in einer nachfolgenden Destillation entfernt. Wie die genannten Versuchsergebnisse zeigen, werden hierbei die Konzentrationen der störenden Stoffe verringert. Eine vollständige Beseitigung gelingt nicht.

Daneben sind im Stand der Technik verschiedene Verfahren zur Herstellung von hochreinem THF über aufwendige Destillationsverfahren bekannt. Wegen der ähnlichen Siedepunkte ist jedoch eine vollständige Abtrennung der Verunreinigungen auch mit hohem Destillationsaufwand nicht möglich.

Der Einsatz von THF mit geringem Sauerstoffgehalt zur Herstellung von PTHF mit verringerter Farbzahl ist z.B. in JP 84-264636 beschrieben. Hier wird die Polymerisation von THF unter Inertgasatmosphäre beschrieben, wobei die Sauerstoffkonzentration in den Einsatzstoffen unter 30 ppm liegt.

Bei keinem der bisher beschriebenen Verfahren gelingt es, die störenden, sogenannten ungesättigten Verunreinigungen wie Aldehyde, Dihydrofuran, Sauerstoff, Methacrolein und THF-Hydroperoxide vollständig zu reduzieren (< 1 ppm je Substanz) und somit dem PTHF-Herstellprozess ein THF zuzuführen, dass praktisch frei von diesen Verunreinigungen ist.

Da jedoch bereits geringe Mengen dieser Verunreinigungen einen Einfluß auf die Farbzahl des PTHF haben, bestand die Aufgabe, ein einfaches und kostengünstiges Verfahren zur Herstellung von hochreinem THF bereitzustellen, das im wesentlichen frei von diesen ungesättigten Verbindungen ist und das zur Herstellung von PTHF mit sehr niedriger Farbzahl und zur Herstellung von THF-Copolymeren, deren Mono- und Diestern sowie den Mono- oder Diestern von PTHF geeignet ist.

Unter hochreinem THF wird im Rahmen dieser Erfindung ein solches THF verstanden, das im wesentlichen frei ist von Aldehyden, Dihydrofuran, Methacrolein, Sauerstoff und THF-Peroxiden. Unter im wesentlichen frei von diesen störenden Verunreinigungen wird ihr Anteil in einem Konzentrationsbereich von < 1 ppm je Substanz verstanden.

Gegenstand der Erfindung ist ein Verfahren, bei dem in an sich bekannter Weise hergestelltes Roh-Tetrahydrofuran destillativ in Rein-Tetrahydrofuran übergeführt, dieses anschliessend einer im wesentlichen vollstängigen Hydrierung an einem Katalysator auf einem Träger unterworfen und das so erhaltene hochreine Tetrahydrofuran unmittelbar nach seiner Herstellung zur Polymerisation verwendet wird. Bei den Katalysatoren handelt es sich um solche gemäss Anspruch 1.

Zunächst wird in an sich bekannter Weise hergestelltes Roh-Tetrahydrofuran destillativ in Rein-Tetrahydrofuran überführt. Geeignete Destillationsverfahren sind beispielsweise aus DE 37 26 805 bekannt. Durch diese Destillation wird Rein-Tetrahydrofuran mit einer Reinheit von >99,9% und einem Gesamtgehalt an sogenannten ungesättigten, störenden Verbindungen wie Aldehyden, Dihydrofuran, Peroxiden, Sauerstoff von zusammen max. 500 ppm, bevorzugt max. 200 ppm, besonders bevorzugt max. 100 ppm erhalten. Rein Tetrahydrofuran kann zusätzlich zu den vorgenannten ungesättigten, störenden Verbindungen max. 500 ppm sonstige Verunreinigungen wie zum Beispiel Butyrolacton, Butandiol, Butanol, bevorzugt max. 200 ppm, besonders bevorzugt max. 100 ppm, enthalten.

Dieses Rein-Tetrahydrofuran wird einer Hydrierung unterworfen, wobei die genannten störenden, farbbildenden Verunreinigungen im wesentlichen vollständigen chemisch beseitigt werden.

Die Bezeichnung "im wesentlichen vollständige Hydrierung" bedeutet dabei ein Entfernen der störenden, sogenannten ungesättigten, zuvor genannten Verbindungen auf jeweils < 1 ppm je Substanz.

Der direkte Einsatz des hydrierten THF zur Polymerisation nach diesem Verfahrens ist jedoch nur dann möglich, wenn die bei der Hydrierung durch Umwandlung der störenden, sogenannten ungesättigten Verbindungen anfallenden Nebenkomponenten in so geringen Mengen entstehen, dass diese keinen negativen Einfluss auf die Polymerisationsreaktion sowie auf die Qualität des PTHF haben. Solche bei der Hydrierung entstehenden Nebenkomponenten können beispielsweise sein:
- n-Butanol (Hydrierung von n-Butyraldehyd
- iso-Butanol (Hydrierung von iso-Butyraldehyd
- Propanol (Hydrierung von Propionaldehyd)

Diese Nebenkomponenten entstehen bei der Hydrierung in der gleichen Menge wie die entsprechenden Aldehyde verbraucht werden. In Summe wird die Menge der Nebenkomponenten also durch diese Reaktion nicht vergrößert. Die Hydrierung von Dihydrofuran sowie THF-Hydroperoxid beeinflusst die Menge der Nebenkomponenten nicht, da hierbei jeweils THF entsteht.

Durch die Hydrierung müssen die im Rein-THF vorliegenden Aldehyde, Dihydrofuran sowie Peroxide vollständig zu den entsprechenden Hydrierprodukten , beispielsweise Alkohole und THF, umgesetzt werden und zudem sollten keine nennenswerten Nebenreaktionen (z.B. Hydrierung von THF zu Butanol) erfolgen.

Dies erfordert den Einsatz von selektiven und geeigneten Heterogenkatalysatoren sowie milden Hydrierbedingungen. Die Hydrierprodukte und die Verbindungen aus Nebenreaktionen liegen dann in so geringen Mengen vor, dass sie bei Polymerisation des THF zu PTHF keine negativen Einfluß auf die Produktqualität des Polymeren haben.

Die Katalysatoren enthalten insbesondere Elemente oder Verbindungen dieser Elemente aus der Gruppe der Übergangsmetalle der Nebengruppen 7 bis 11 des Periodensystems der Elemente. Hier sind beispielsweise Ruthenium, Rhenium, Nickel, Eisen, Kupfer, Kobalt, Palladium und Platin zu nennen. Es können auch Mischungen oder Legierungen verschiedener Elemente vorhanden sein. Zusätzlich zu den vorgenannten Elemente können dann auch solche aus den Nebengruppe 6 und 10 des Periodensystems der Elemente, wie z.B. Chrom, Molybdän oder Zink, vorhanden sein.

Wenn Katalysatoren verwendet werden, die unedle Metalle, wie z.B. Eisen, Kobalt, Nickel oder Kupfer enthalten, ist es zweckmäßig, sie vor dem Einsatz zu Reduzieren, d.h. in die aktive Form zu überführen. Dies kann nach dem Fachmann bekannten Methoden, vorzugsweise mit Wasserstoff durchgeführt werden. Die Aktivierung des Katalysators vor der Hydrierung ist generell die bevorzugte Variante.

Es können prinzipiell alle bei der Katalysatorherstellung bekannten Träger eingesetzt werden, Z.B. solche aus Aluminiumoxid, Siliciumoxid, Bimsstein, Bentonit, Magnesiumsilikat, Titanoxid, Zirkonoxid, Zinkoxid, Magnesiumoxid, Siliziumcarbid, Aktivkohle, Mullit, Cordierit oder Mischungen davon bestehen. Die hydrieraktiven Komponenten können z.B. durch gemeinsames Fällen von löslichen Komponenten von Hydriermetall und Träger, durch Auffällen, Aufsprühen oder Tränken von löslichen Komponenten von Hydriermetall auf bereits fertigem Träger hergestellt werden. Besonders Lösungen von wäßrigen Metallsalzen eignen sich zum Auftragen der aktiven Komponente durch Tränken, Aufsprühen oder andere geeignete Verfahren.

Als Metallsalze der VII. - XI. Nebengruppe der Periodensystems der Elemente eignen sich Nitrate, Nitrosylnitrate, Halogenide, Carbonate, Carboxylate, Acetylacetonate, Chlorokomplexe, Nitrokomplexe oder Aminkomplexe der entsprechenden Metalle. Bei Katalysatoren, die mehrere Metalle der VII. - XI. Nebengruppe des Periodensystems der Elemente enthalten, können die Metallsalze bzw. deren Lösungen gleichzeitig oder nacheinander aufgebracht werden. Die mit Metallsalzlösungen beschichteten bzw. getränkten Träger werden dann in üblicherweise getrocknet (vorzugsweise bei Temperaturen zwischen 100°C und 150°C) und wahlweise calciniert (vorzugsweise bei Temperaturen zwischen 200°C und 600°C).

Die beschichteten und getrockneten sowie wahlweise calcinierten Trager können dann auch noch durch eine Behandlung im Gasstrom, der freien Wasserstoff enthält, aktiviert werden. Vorzugsweise besteht der Gasstrom aus 50 - 100 Vol-% Wasserstoff und 0 - 50 Vol-% Stickstoff.

Gut geeignet für das erfindungsgemäße Verfahren sind weiterhin auch makroporöse Trägermaterialien. Unter makroporösen Katalysatoren werden im allgemeinen solche Systeme verstanden, die einen Anteil > 10 % an Poren mit einem Durchmesser von > 100 nm enthalten. Prinzipiell können hierzu alle für die Herstellung von makroporösen Katalysatoren bekannten Trägermaterialien eingesetzt werden.

Solche makroporösen Katalysatoren für die Hydrierung von C-C-Mehrfachbindungen in Oligo- und Polymeren ist bereits in mehreren Patenten wie z.B. EP 813 906, EP 0653243 oder EP 842699 beschrieben. Diese Schriften enthalten auch Angaben über die Herstellung solcher Systeme.

Bevorzugte Katalysatoren sind auch solche, bei denen die hydrieraktiven Komponenten als äußere Schale auf einem Träger aufgebracht sind. Dies hat den Vorteil, dass i.A. weniger Aktivmasse bei gleicher Aktivität vorhanden ist. Der allgemeine Begriff für diese Katalysatoren heißt "Schalenkatalysatoren". Ein Sonderfall dabei ist, wenn die Aktivmasse auf ein festes Gewebe aufgebracht ist. Dieses Gewebe kann z.B. aus Metallnetzen bestehen, die durch Behandlung mit Sauerstoff oberflächig z.B. Aluminiumoxid beschichtet sind, das wiederum als Träger, z.B. für Palladium dient.

Alle anwendbaren Katalysatoren können prinzipiell in Form von Pulvern, beispielsweise bei der Durchführung des Verfahrens in Suspensionsfahrweise, oder zweckmäßigerweise als Formkörper, z.B. in Form von Strängen, Zylindern, Kugeln, Ringen oder Splitt, insbesondere bei einer Festbettanordnung des Katalysators, im erfindungsgemäßen Verfahren eingesetzt werden.

Die erfindungsgemäße Hydrierung kann grundsätzlich diskontinuierlich oder kontinuierlich ausgeübt werden, wobei aus wirtschaftlichen Gründen in der Regel die kontinuierliche Betriebsweise bevorzugt wird. Dabei kann die Hydrierung in herkömmlichen für kontinuierliche Verfahren geeigneten Reaktoren oder Reaktoranordnungen in Suspensions- oder Festbettfahrweise, beispielsweise in Schlaufenreaktoren oder Rührreaktoren bei Suspensionsfahrweise oder in Rohrreaktoren bzw. Festbettreaktoren bei Festbettfahrweise ausgeführt werden.

Die Hydrierung des Rein-Tetrahydrofuran wird bei einer Temperatur von 20 bis 300°C, vorzugsweise 20 bis 200°C, besonders bevorzugt 50 bis 100°C und einem Druck von 1 bis 300 bar, vorzugsweise 1 bis 100 bar, besonders bevorzugt 1 bis 20 bar durchgeführt.

Bei der kontinuierlichen Betriebsweise beträgt die Katalysatorbelastung üblicherweise 0,02 bis 1,0 kg THF / (1 Katalysator * h), bevorzugt 0,02 bis 0,5 kg THF / (1 Katalysator * h), besonders bevorzugt 0,05 bis 0,25 kg THF / (1 Katalysator * h). Als Hydriergase können beliebige Gase eingesetzt werden, die freien Wasserstoff enthalten und keine schädlichen Mengen an Katalysatorgiften, beispielsweise Kohlenmonoxid aufweisen. Vorzugsweise wird reiner Wasserstoff als Hydriergas verwendet.

Diese milden Reaktionsbedingungen und insbesondere die sehr geringen Verweilzeiten bieten bei der technischen Durchführung erhebliche Vorteile, da nur ein kleiner, auf geringe Temperaturen und geringen Druck ausgelegter Reaktor benötigt wird.

In einer besonders bevorzugten Ausführungsform wird die Hydrierung kontinuierlich an fest angeordneten Katalysatoren in Riesel- oder Sumpffahrweise ohne Rückvermischung durchgeführt. Hierbei kann mit einer sehr einfachen und entsprechend kostengünstigen Hydrierapparatur der für den erfindungsgemäßen Effekt notwendigen Umsatz an störenden Verunreinigungen am besten erreicht werden. Weiterhin treten bei den genannten milden Hydrierbedingungen keine nennenswerten Nebenreaktionen auf, die zu einem Anstieg der Nebenkomponenten im Hydrieraustrag führen würden.

In einer weiteren besonders bevorzugten Ausführungsform dieses Verfahrens wird das THF nach der Hydrierung ohne weitere Behandlung und auch ohne vorherige Zwischenlagerung sofort für die Polymerisation zu PTHF eingesetzt. In diesem Fall sind zur Vermeidung einer Kontamination mit Sauerstoff keine besonderen technischen Vorkehrungen wie z.B. ein besonders sauerstofffreies Inertgas nötig.

Da bei der THF-Polymerisation mit den üblichen Polymerisationskatalysatoren meist keine vollständigen Umsätze erhalten werden, wird überschüssiges THF üblicherweise nach der Polymerisation destillativ abgetrennt und in den Prozeß zurückgeführt.

Gemäß einer weiteren besonders bevorzugten Ausführungsform dieses Verfahrens wird das nach der Polymerisation abgetrennte und zurückgeführte THF mit frischem Rein-Tetrahydrofuran gemischt der Hydrierung des erfindungsgemäßen Verfahrens zugeführt und dann zur Polymerisation zu verwenden.

Außerdem kann die Polymerisation in Gegenwart mindestens eines Telogens und/oder Comonomeren durchgeführt werden. Die Wahl des geeigneten Telogens und/oder Comonomeren ist bedingt durch das jeweils gewünschte Produkt und dem Fachmann an sich bekannt. Gemäß einer besonderen Ausführungsform des erfindungsgemäßen Verfahrens wird Rein-Tetrahydrofuran gemeinsam mit einem Telogen und/oder Comonomer hydriert. Hierbei ist darauf zu achten, dass das Telogen bei der Hydrierung nicht verändert wird. Gemäß einer weiteren Ausführungsform des erfindungsgemäßen Verfahrens wird die Polymerisation mittels Essigsäureanhydrid als Telogen durchgeführt, wobei sowohl das Rein-Tetrahydrofuran als auch das Essigsäureanhydrid vor der Polymerisation zusammen oder getrennt voneinander hydriert werden. Dadurch werden die Verunreinigungen, die zu schlechten Farbzahlen führen, in beiden Ausgangsstoffen, dem Essigsäureanhydrid wie auch dem Tetrahydrofuran, auf eine Konzentration <1 ppm reduziert.

Im folgenden wird die Erfindung anhand von Beispielen näher erläutert.

### BEISPIELE

### A: Herstellung der für die Beispiele verwendeten Katalysatoren Herstellungsbeispiel 1 (Katalysator A)

Siliciumdioxid in Strangform (4mm, BET-Oberfläche 140 m²/g) wurde mit einer überstehenden Lösung von Nickel-, Kupfer- und Mangannitrat sowie Phosphorsäure (9,2 Gew.-% Ni, 3,2 Gew.-% Cu, 0,8 Gew.-% Mn und 0,65 Gew.-% Phosphorsäure) zweimal 15 Minuten getränkt. Nach jeder Tränkung wurden die Stränge bei 120°C getrocknet und bei 630°C getempert. Der Katalysator A enthielt 21 Gew.-% NiO, 7,3 Gew.-% CuO, 2 Gew.-% Mn₃O₄ und 1,2 Gew.-%

### Herstellungsbeispiel 2 (Katalysator B)

47 g einer wässrigen Palladiumnitratlösung (11 Gew.-% Palladium) wurden mit 680 ml Wasser verdünnt und auf 2253 g eines makroporösen Aluminiumträger in Strangform (4mm Stränge, alpha Al₂O₃, BET-Oberfläche 8 m²/g) aufgesprüht. Die Trocknung und Temperung erfolgte wie bei Katalysator A beschrieben. Der Katalysator B enthielt 0,22 Gew.-% Palladium.

### Herstellungsbeispiel 3 (Katalysator C)

13,8 g einer wässrigen Palladiumnitratlösung (11 Gew.-% Palladium) wurden mit 420 ml Wasser verdünnt und auf 730 g eines makroporösen Aluminiumträger in Kugelform (2-4 mm Kugeln, gamma-Al₂O₃, BET-Oberfläche 230 m²/g) aufgesprüht. Die Trocknung und Temperung erfolgte wie bei Katalysator A beschrieben. Der Katalysator C enthielt 0,21 Gew.-% Palladium.

### Herstellungsbeispiel 4 (Katalysator D)

19,8 g einer wässrigen Palladiumnitratlösung (11 Gew.-% Palladium) wurden mit 1000 ml Wasser verdünnt und auf 1042 g eines makroporösen Aluminiumträger in Strangform (1,5 mm Stränge, gamma/theta-Al₂O₃, BET-Oberfläche 85 m²/g) aufgesprüht. Die Trocknung und Temperung erfolgte wie bei Katalysator A beschrieben. Der Katalysator D enthielt 0,22 Gew.-% Palladium.

### Herstellungsbeispiel 5 (Katalysator E)

3255 g einer wässrigen Palladiumnitratlösung (11 Gew.-% Palladium) wurden mit 79 ml Wasser verdünnt und auf 140 kg eines Aluminiumträger in Kugelform (1,5 mm Stränge, gamma-Al₂O₃, BET-Oberfläche 230 m²/g) aufgesprüht. Die Trocknung erfolgte bei 120°C, die anschließende Temperung für 6 Stunden bei 300°C. Der Katalysator G enthielt 0,72 Gew.-% Palladium.

### Herstellungsbeispiel 6 (Katalysator F)

72,7 g einer Palladiumnitratlösung (11 Gew.-% Palladium) wurden in 4000 ml Wasser und 100 g eines hochmolekularen Natriumpolyacrylats (Aqualic, Fa. BASF) versetzt. Nach 60 Minuten wurde die erhaltenen gelartige Masse mit 5527 g Pseudoböhmit in einem Mix-Muller 70 Minuten verknetet. Während dieser Zeit wurden 200 g einer 25-%igen wäßrigen Ammoniaklösung und 900ml Wasser zugegeben. Die Masse wurde in einem Extruder zu 4mmm Strängen verformt, die anschließend bei 120°C getrocknet und sodann eine Stunde bei 500°C getempert wurden. Der Katalysator A enthielt 0,21 Gew.-% Palladium. Die BET-Oberfläche betrug 235 m²/g.

### Herstellungsbeispiel 7 (Katalysator G)

Katalysator G wird durch Fällung einer Lösung von Cu- und Al-nitrat mit Sodalösung hergestellt. Das bei der Fällung entstehende Fällgut wird abfiltriert, gewaschen und bei 120°C getrocknet. Das getrocknete Pulver wird 2 h bei 250°C calziniert und danach zu Tabletten mit 5 mm Durchmesser verpresst. Diese Tabletten werden 2 h bei 580°C getempert. Der fertige Katalysator enthält 53% CuO und 47% Al₂O₃.

### B: Herstellung von Rein-Tetrahydrofuran

Rein-Tetrahydrofuran wurde in an sich bekannter Weise aus einem Tetrahydrofuran/Wassergemisch gemäß dem im Beispiel der DE 37 26 805 beschriebenen Verfahren hergestellt.

Dieses Rein-Tetrahydrofuran wies eine Reinheit von > 99,9 % und folgende Verunreinigungen auf:
- Methacrolein 25 ppm
- n-Butyraldehyd 11 ppm
- iso-Butyraldehyd 8 ppm
- 2,3-Dihydrofuran 12 ppm
- 2,5-Dihydrofuran 6 ppm
- THF-Hydroperoxid 3 ppm
- Sonstige 21 ppm

Unter "Sonstige" werden in dieser Anmeldung Verunreinigungen wie z.B. n-Butanol, y-Butyrolacton oder Methyltetrahydrofuran verstanden, die nachweislich keinen Einfluss auf die Farbzahl im gebildeten PTHF haben und die bei der THF-Hydrierung nicht verändert werden.

### B. Hydrierung von Rein-Tetrahydrofuran mit Katalysator A

Die Hydrierung von dem wie unter B) beschrieben erhaltenen Rein-Tetrahydrofuran mit verschiedenen Katalysatoren wurde in einem kontinuierlich betriebenen 11-Hydrierreaktor durchgeführt.

Der Reaktor wurde bei allen Versuchen mit 300 ml Katalysator A befüllt. Dann wurden stündlich 3600 ml (5 min Verweilzeit), 1200 ml (15 min Verweilzeit) bzw. 400 ml (45 min Verweilzeit) Rein-Tetrahydrofuran und stündlich 10 1 Wasserstoff zudosiert. Die Hydrierbedingungen sind ebenso wie die Verweilzeiten und die Konzentration der Verunreinigungen des hochreinen Tetrahydrofurans Tabelle 1 zu entnehmen.

### C. Hydrierung von Rein-Tetrahydrofuran mit verschiedenen Katalysatoren

Die Hydrierung wurde mit dem unter B) beschriebenen Rein-Tetrahydrofuran mit verschiedenen Katalysatoren in einem kontinuierlich betriebenen 11-Hydrierreaktor durchgeführt.

Der Reaktor wurde bei allen Versuchen mit 300 ml Katalysator befüllt. Dann wurden 1200 ml Rein-Tetrahydrofuran (Verweilzeit 45 min) und stündlich 10 1 Wasserstoff zudosiert. Die Hydrierungen wurde jeweils bei 60°C, einem Druck von 10 bar und Verweilzeiten von 15 min durchgeführt. Die Verunreinigungen des hochreinen Tetrahydrofurans sind Tabelle 2 zu entnehmen.

### D. Hydrierung von verschiedenen Rein-Tetrahydrofuran-Qualitäten mit Katalysator A

Die Hydrierung wurde mit verschiedenen Rein-Tetrahydrofuran-Qualitäten durchgeführt, die analog zu dem in der DE-A 37 26 805 beschriebenen Verfahren hergestellt wurden. Die Hydrierung dieser Rein-Tetrahydrofuran-Qualitäten wurden mit Katalysator A in einem kontinuierlich betriebenen 1 1-Hydrierreaktor durchgeführt.

Der Reaktor wurde bei allen Versuchen mit 300 ml Katalysator befüllt. Dann wurden 1200 ml Rein-Tetrahydrofuran (Verweilzeit 45 min) und stündlich 10 1 Wasserstoff zudosiert. Die Hydrierungen wurde jeweils bei 60°C, einem Druck von 10 bar und Verweilzeiten von 15 min durchgeführt. Die Verunreinigungen des hochreinen Tetrahydrofurans sind Tabelle 3 zu entnehmen.

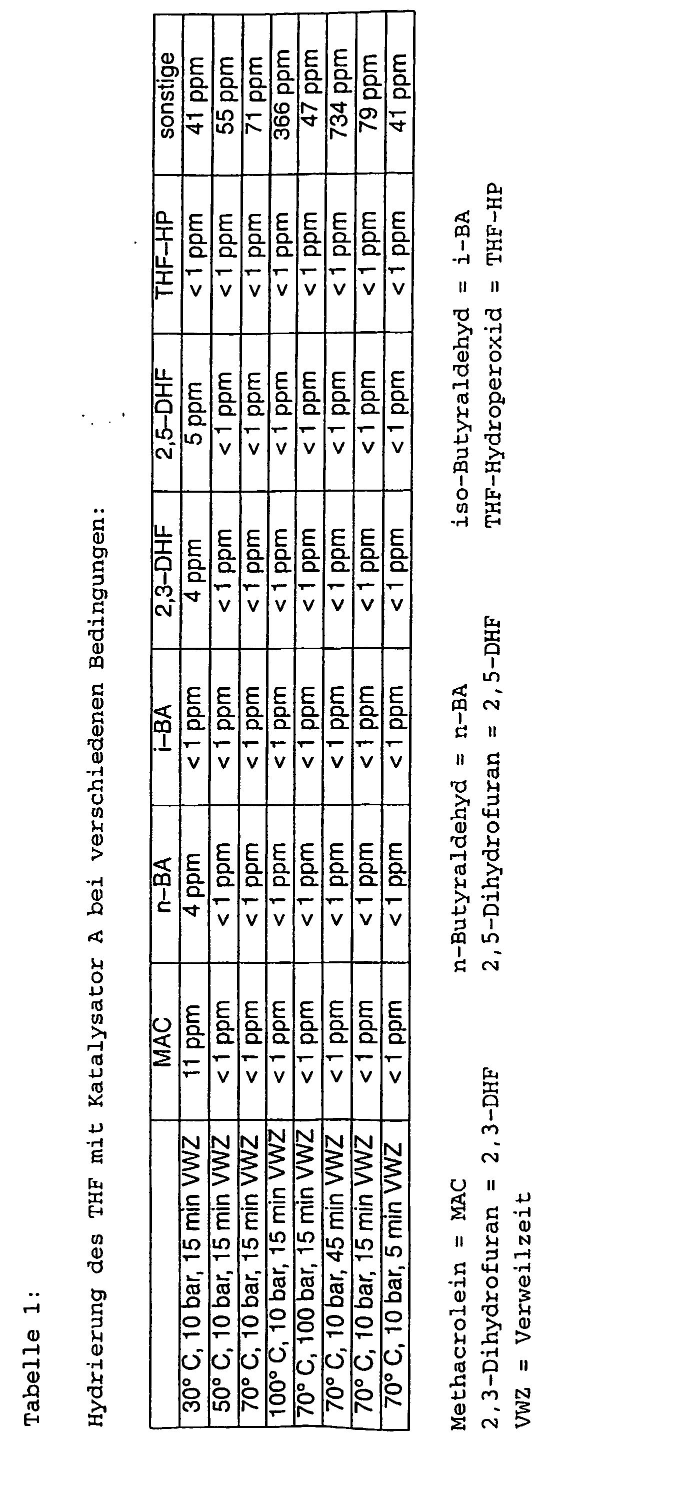

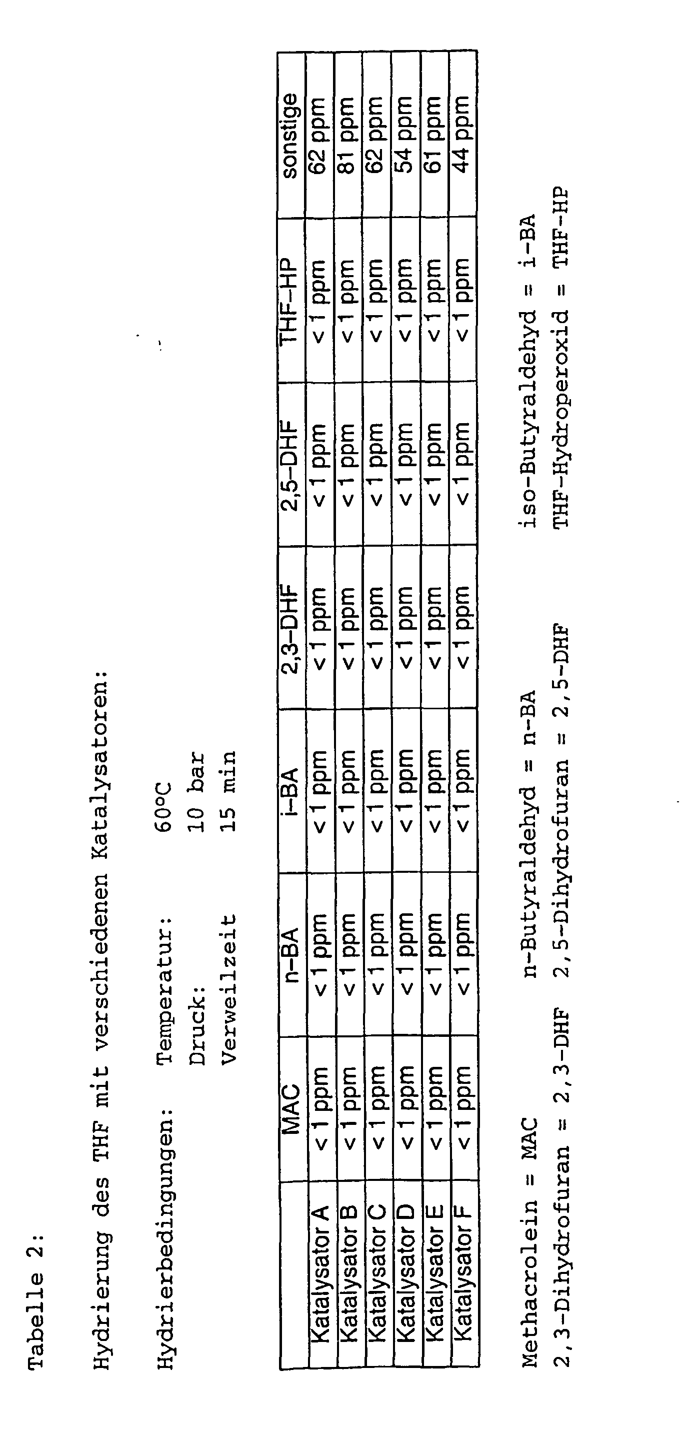

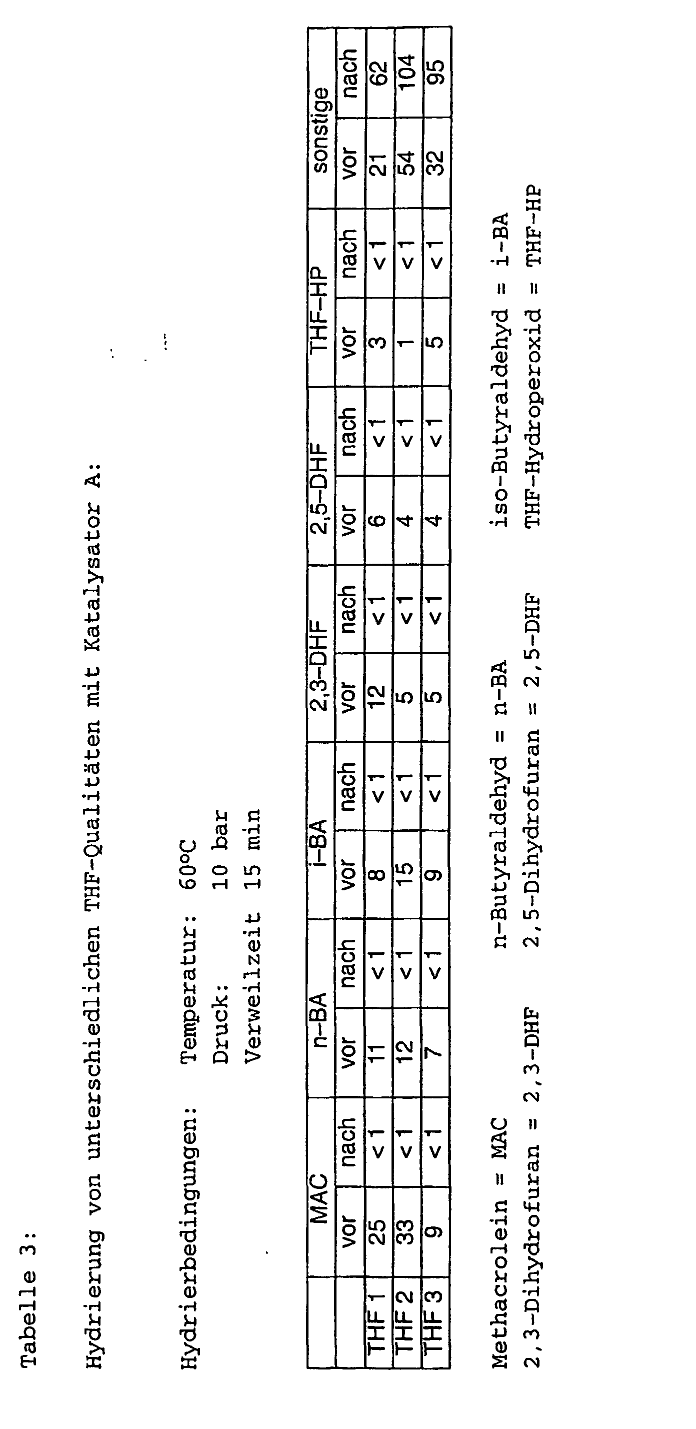

### E: Herstellung von PTHF mit hochreinem THF

Hochreines THF wurde unmittelbar nach der erfindugsgemäßen Hydrierung zur PTHF-Herstellung ohne vorherige Lagerung nach der im folgenden beschriebenen allgemeinen Vorschrift eingesetzt. Die erfindungsgemäß erzielten Polymerisationsergebnisse mit diesem hochreinen THF (Beispiele 1, 2 und 3) wurden verglichen mit den erzielbaren Ergebnissen bei nicht-erfindungsgemäßer Verwendung von THF-Qualitäten mit Reinheiten > 99;9 %, die vor der der Poymerisation nicht hydriert worden waren.

### Polymerisation von THF

Die Versuche zur Polymerisation von THF wurden in einer kontinuierlich betriebenen Umlaufapparatur durchgeführt. Der Reaktor wurde bei allen Versuchen mit 250 ml Montmorrilonit-Katalysator (K 306 der Fa. Südchemie) gefüllt. Dann wurde die Apparatur mit einer Mischung von 600 g THF der in Tabelle 4 angegebenen Qualitaät und 42 g Essigsäureanhydrid gefüllt. Die Mischung wurde so dann von oben nach unten (Rieselfahrweise) über den Katalysator geleitet. Nach einer Verweilzeit von 10 h bei 45°C wurde die Reaktion abgebrochen. Nach destillativer Abtrennung von nicht umgesetzten THF wurde der Reaktionsumsatz und die Farbzahl des gebildeten PTHF-Diacetates gemessen.

Die Bestimmung der Farbzahlen wird in den Normen DIN 53 409 und ASTM-S-1209 beschrieben.

Die Ergebnis der Polymerisationen sowie die Verunreinigungen der verwendeten THF-Qualitäten sind Tabelle 4 zu entnehmen.

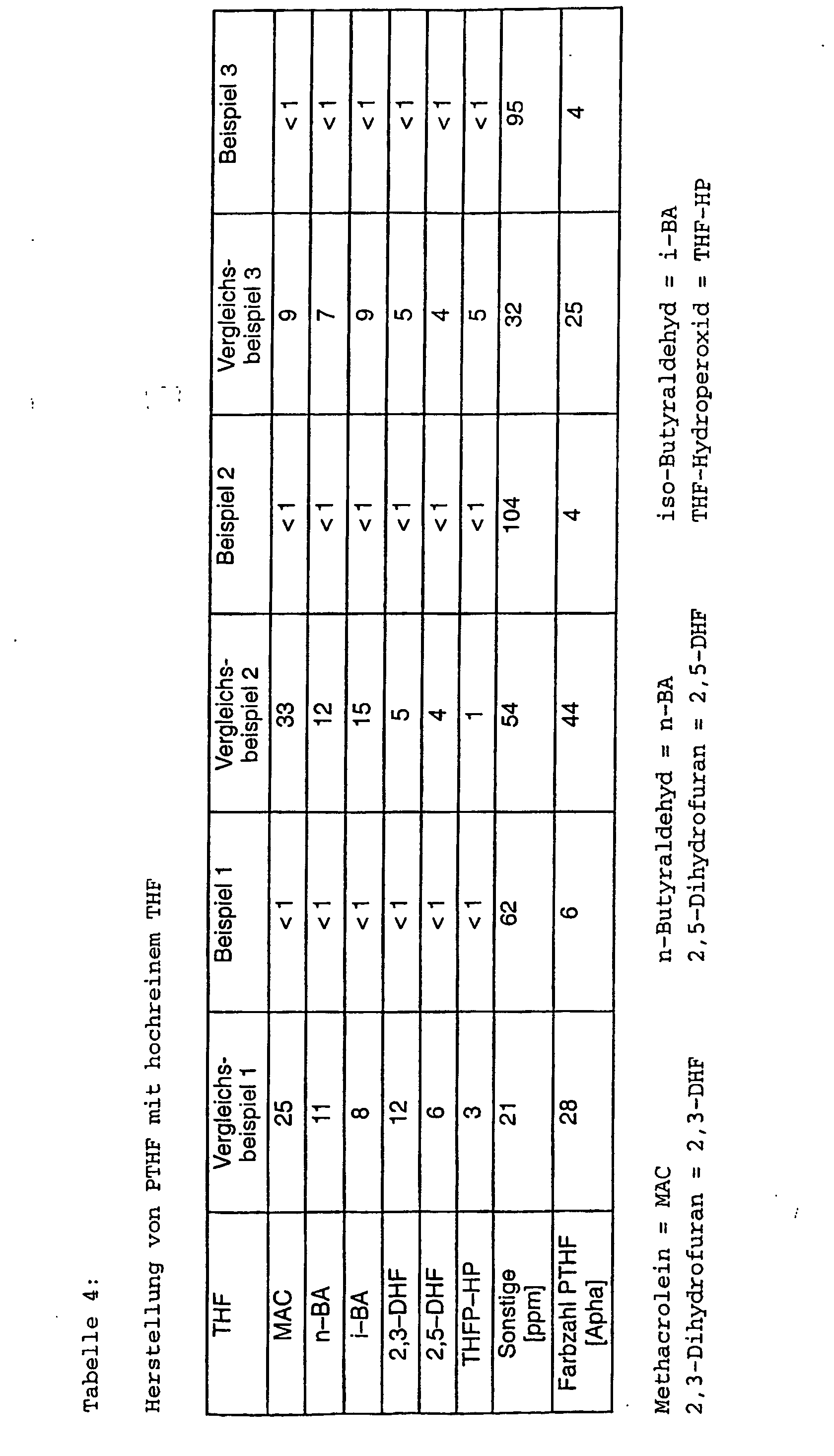

## Patentansprüche

1. Verfahren zur Herstellung von Polytetrahydrofuran, Tetrahydrofuran-Copolymeren, deren Mono- oder Diestern sowie den Mono- oder Diestern von Polytetrahydrofuran mit niedrigen Farbzahlen in Gegenwart eines Katalysators, bei dem in an sich bekannter Weise hergestelltes Roh-Tetrahydrofuran destillativ in Rein-Tetrahydrofuran übergeführt, dieses anschließend einer im wesentlichen vollständigen Hydrierung an einem Katalysator, der Übergangsmetalle der Gruppen 7 bis 10 des Periodensystems der Elemente oder deren Oxide auf einem Träger, der ausgewählt ist aus Aluminiumoxid, Siliciumoxid, Bimsstein, Bentonit, Magnesiumsilikat oder Mischungen, aufweist, unterworfen und das so erhaltene hochreine Tetrahydrofuran unmittelbar nach seiner Herstellung zu der Polymerisation verwendet wird.

2. Verfahren nach Anspruch 1, **dadurch gekennzeichnet, dass** die Hydrierung bei einer Temperatur von 20 bis 300°C, bevorzugt 20 bis 200°C, besonders bevorzugt 50 bis 100 und einem Druck von 1 bis 300 bar, bevorzugt 1 bis 100, besonders bevorzugt 1 bis 20 bar, durchgeführt wird.

3. Verfahren nach einem der Ansprüche 1 bis 2, **dadurch gekennzeichnet, dass** die Polymerisation mittels Essigsäureanhydrid durchgeführt wird und dass sowohl das Rein-Tetrahydrofuran als auch Essigsäureanhydrid vor der Polymerisation zusammen oder getrennt voneinander hydriert werden.

4. Verfahren nach einem der Ansprüche 1 bis 3, **dadurch gekennzeichnet, dass** die Polymerisation in Gegenwart mindestens eines Telogens und/oder Comonomeren durchgeführt wird.

5. Verfahren nach einem der Ansprüche 1 bis 4, **dadurch gekennzeichnet, dass** nach der Polymerisation abgetrenntes und zurückgeführtes Tetrahydrofuran mit frischem Rein-Tetrahydrofuran gemischt der Hydrierung zugeführt und erneut zur Polymerisation verwendet wird.

## Claims

1. A process for preparing polytetrahydrofuran, tetrahydrofuran copolymers, their monoesters or diesters and the monoesters or diesters of polytetrahydrofuran having a low color number in the presence of a catalyst, which comprises converting crude tetrahydrofuran which has been prepared in a manner known per se into pure tetrahydrofuran by distillation, subsequently subjecting the latter to essentially complete hydrogenation over a catalyst comprising transition metals of groups 7 to 10 of the Periodic Table of the Elements or oxides thereof on a support selected from among aluminium oxide, silicon oxide, pumice, bentonite, magnesium silicate and mixtures thereof and using the high-purity tetrahydrofuran obtained in this way for the polymerization directly after its preparation.

2. A process as claimed in claim 1, wherein the hydrogenation is carried out at from 20 to 300°C, preferably from 20 to 200°C, particularly preferably from 50 to 100°C, and a pressure of from 1 to 300 bar, preferably from 1 to 100 bar, particularly preferably from 1 to 20 bar.

3. A process as claimed in either of claims 1 and 2, wherein the polymerization is carried out by means of acetic anhydride and both the pure tetrahydrofuran and the acetic anhydride are hydrogenated together or separately prior to the polymerization.

4. A process as claimed in any of claims 1 to 3, wherein the polymerization is carried out in the presence of at least one telogen and/or comonomer.

5. A process as claimed in any of claims 1 to 4, wherein tetrahydrofuran which has been separated off after the polymerization and recirculated is mixed with fresh pure tetrahydrofuran and passed to hydrogenation and reused for the polymerization.

## Revendications

1. Procédé de préparation de polytétrahydrofuranne, de copolymères de tétrahydrofuranne, de leurs monoesters ou diesters ainsi que des monoesters ou diesters de polytétrahydrofuranne présentant de faibles indices de couleur, en présence d'un catalyseur, dans lequel du tétrahydrofuranne brut préparé d'une manière connue en soi est converti par distillation en tétrahydrofuranne pur, celui-ci est ensuite soumis à une hydrogénation sensiblement complète sur un catalyseur qui présente des métaux de transition des groupes 7 à 10 du système périodique des éléments ou leurs oxydes sur un support qui est choisi parmi de l'oxyde d'aluminium, de l'oxyde de silicium, de la pierre ponce, de la bentonite, du silicate de magnésium ou leurs mélanges, le tétrahydrofuranne très pur ainsi obtenu est, immédiatement après sa préparation, utilisé pour la polymérisation.

2. Procédé suivant la revendication 1, **caractérisé en ce que** l'hydrogénation est effectuée à une température de 20 à 300°C, de préférence de 20 à 200°C, particulièrement avantageusement de 50 à 100°C et à une pression de 1 à 300 bars, de préférence de 1 à 100 bars, particulièrement avantageusement de 1 à 20 bars.

3. Procédé suivant l'une des revendications 1 et 2, **caractérisé en ce que** la polymérisation est effectuée au moyen d'anhydride acétique et **en ce qu'**aussi bien le tétrahydrofuranne pur que l'anhydride acétique sont hydrogénés avant la polymérisation, conjointement ou séparément l'un de l'autre.

4. Procédé suivant l'une des revendications 1 à 3, **caractérisé en ce que** la polymérisation est effectuée en présence d'au moins un télogène et/ou comonomère.

5. Procédé suivant l'une des revendications 1 à 4, **caractérisé en ce que** du tétrahydrofuranne isolé après la polymérisation et recyclé est amené à l'hydrogénation en mélange avec du tétrahydrofuranne pur frais et est à nouveau utilisé pour la polymérisation.
